# EUROPÄISCHE PATENTSCHRIFT

(11) **EP 2 244 079 B1**
(45) Veröffentlichungstag und Bekanntmachung des Hinweises auf die Patenterteilung: **18.10.2017**
(21) Anmeldenummer: 10004405.6
(22) Anmeldetag: 26.04.2010
(51) Int. Cl.: G01M 5/00

(54) **Verfahren und Vorrichtung zum Prüfen von Paletten**
Procedure and device for testing palettes
Procédé et dispositif d'essai de palettes

(30) Priorität: 24.04.2009 DE 102009018829
(43) Veröffentlichungstag der Anmeldung: 27.10.2010
(73) Patentinhaber: Krones AG, 93073 Neutraubling (DE)
(72) Erfinder: Reisinger, Gerhard, 82008 Unterhaching (DE); Koch, Michael, 85235 Bergkirchen (DE)
(74) Vertreter: Grünecker Patent- und Rechtsanwälte PartG mbB

(56) Entgegenhaltungen:
- EP-A1- 1 336 832
- DE-A1- 19 607 713
- DE-U1- 20 305 016
- US-A1- 2006 174 719

## Beschreibung

Die vorliegende Erfindung betrifft ein Verfahren sowie eine Vorrichtung zum Prüfen von Paletten, wobei mittels zumindest eines Prüfkopfs eine Prüfkraft auf die Palette gegeben und die sich einstellende Verformung überwacht wird.

Paletten weisen üblicherweise eine Tragplatte auf, die aus zueinander parallelen Deckbrettern besteht und von einem Palettenunterteil getragen wird, das üblicherweise aus Bodenbrettern sowie Distanzstücken bestehen kann, die die Bodenbretter mit den Deckbrettern bzw. diese zusammenhaltenden Querbrettern verbindet. Bei sog. Euro-Paletten sind diese Distanzelemente in Form von Klötzen ausgebildet, während bei sog. Halbpaletten oder kleineren Paletten wie beispielsweise der sog. Düsseldorfer Palette die genannten Distanzelemente in Form von Blechwinkeln ausgebildet sind, die mit den Bodenbrettern bzw. den Deckbrettern bzw. diese zusammenhaltenden Querbretter vernietet sind. Speziell bei den letztgenannten Paletten mit Blechwinkeln und Nietverbindungen kommt es zu einem schleichenden Lockern der Verbindungen zwischen den Distanzelementen und den Bodenbrettern bzw. den Deckbrettern, so dass die Stabilität der Paletten leidet.

Da auf derartigen Paletten, beispielsweise in der Getränkeindustrie, hohe Lasten in Form von hohen Türmen gestapelt werden, können auch bereits kleinere Instabilitäten der Palette signifikante Auswirkungen hinsichtlich der Stabilität des gestapelten Turms haben. Instabilitäten in den Verbindungsstellen werden hierbei insbesondere dann beim Transport der beladenen Paletten beispielsweise auf einem Förderband oder auch in einem Lkw relevant, wenn durch Bremsen und Beschleunigen dynamische Kräfte auf den gestapelten Turm wirken.

Es wurden daher bereits diverse Verfahren und Vorrichtungen zum Prüfen der Stabilität von Paletten vorgeschlagen, die trotz der zunehmenden Automatisierung der Handhabungsprozesse ein sicheres Erkennen fehlerhafter Paletten ermöglichen sollen. Neben Vollständigkeit und Belastbarkeit erlangt aufgrund der zunehmenden Automatisierung die Stabilität, d.h. die mögliche Verformung und die einwandfreie Qualität der Verbindung der einzelnen Elemente der Paletten, eine immer größere Bedeutung.

Üblicherweise werden dabei die Paletten an verschiedenen Stellen mit Prüfkräften beaufschlagt und die sich einstellenden Verformungen überwacht und mit Grenzwerten verglichen. Treten zu große Verformungen auf, ist dies ein Zeichen dafür, dass die Palette keine ausreichende Stabilität mehr besitzt. Die Prüfkräfte werden hierbei regelmäßig in Richtung der Gewichtskraft der Beladung aufgebracht, mit der die Paletten auch bei ihrem bestimmungsgemäßen Einsatz beaufschlagt werden. Hierzu fahren Prüfköpfe im Wesentlichen senkrecht zur Ebene der Deckbretter auf verschiedene Elemente der Palette, insbesondere die Deckbretter, um deren Verformung zu beobachten. Eine derartige Prüfung geht dabei von der Überlegung aus, dass hierdurch nicht nur schadhafte Palettenelemente wie beispielsweise Deckbretter mit Rissen erkannt werden können, sondern auch schadhafte oder lockere Verbindungen zwischen den Palettenelementen auffallen, da bei lockeren Verbindungen nicht mehr alle Palettenteile der Verformung des unmittelbar belasteten Bauteils folgen.

Beispielsweise schlägt die EP 13 36 832 A1 ein Palettenprüfverfahren vor, bei dem die Prüfköpfe derart auf die Deckbretter gefahren werden, dass die Prüfkräfte eine Biegeverformung der Deckbretter bewirken, der sich die damit verbundenen Elemente des Palettenunterteils aufgrund ihres Biegewiderstands widersetzen, so dass das Verformungsverhalten der Elemente des Palettenunterteils ein Indikator für die Qualität der Verbindungen ist. Die Prüfkräfte werden also derart aufgebracht, dass die zu prüfenden Verbindungen nicht im direkten Kraftfluss der Abstützkräfte liegen.

Die US 7,340,971 schlägt weiterhin ein Palettenprüfverfahren vor, bei dem Prüfkräfte über Prüfbackenpaare seitlich gegen das Palettenoberteil gegeben werden, wobei die Prüfbackenpaare auf gegenüberliegenden Seiten der Palette angeordnet, jedoch diagonal zu verschiedenen Ecken der Palette hin versetzt sind, so daß die Palette auf ihre Diagonalsteifigkeit hin geprüft wird, d.h. inwieweit sich unter Kraftbeaufschlagung die an sich rechteckige Paletten-Tragplatte aus der rechteckigen Form herauswindet. Weitere Palettenprüfverfahren sind aus den Schriften JP 63-231237, DE 19607713 A1 oder DE 10 2007 035 813 bekannt.

Der vorliegenden Erfindung liegt hiervon ausgehend die Aufgabe zugrunde, ein verbessertes Verfahren sowie eine verbesserte Vorrichtung zum Prüfen von Paletten zu schaffen, die Nachteile des Standes der Technik vermeiden und Letzteren in vorteilhafter Weise weiterbilden. Vorzugsweise soll eine genauere Bestimmung der horizontalen und vertikalen Stabilität der Palette sowie der Qualität ihrer vertikalen Verbindungen mit einem einfach handhabbaren Prüfaufbau erreicht werden, ohne die Palette bis zu den Stabilitätsgrenzen ihrer Verbindungen zu belasten.

Erfindungsgemäß wird diese Aufgabe durch ein Verfahren gemäß Anspruch 1 sowie eine Vorrichtung gemäß Anspruch 14 gelöst. Bevorzugte Ausgestaltungen der Erfindung sind Gegenstand der abhängigen Ansprüche.

Es wird also vorgeschlagen, unter Abweichung von der üblichen Prüfpraxis, gemäß der die Paletten entsprechend ihrem tatsächlichen Einsatz auch bei der Prüfung vertikal belastet werden, die Paletten zur Prüfung seitlichen Belastungen auszusetzen, d.h. mit Kräften zu beaufschlagen, die zumindest mit einer Komponente parallel zur Ebene der Deckbretter auf die Palette wirken, um ein seitliches Wackeln der Palettenelemente relativ zueinander, insbesondere ein seitliches Wackeln bzw. Nachgeben des Palettenunterteils zu Tage zu fördern. Überraschenderweise hat sich nämlich gezeigt, dass die horizontale Beweglichkeit ein exzellentes Maß für die horizontale und vertikale Stabilität der Palette und gleichzeitig für die Qualität der Verbindung der Einzelelemente ist. Durch relativ geringe Prüfkräfte, die seitlich auf die Paletten wirken, können je nach Qualitätsabfall der Palettenstabilität recht große Verformungen erzeugt werden, die einfach gemessen werden können und damit eine präzise Bestimmung des Qualitätszustands erlauben. Hierdurch können auch kleinere Qualitätsverluste bereits im Frühstadium erkannt werden. Erfindungsgemäß ist vorgesehen, dass die Prüfkraft und/oder eine der Prüfkraft des Prüfkopfs entgegenwirkende Widerstandskraft seitlich von einer Längs- oder Schmalseite der Palette her gegen ein Palettenunterteil gegeben und die seitliche Auslenkung des Palettenunterteils erfasst wird, anhand derer der Palettenzustand bestimmt wird.

Eine derartige horizontale Palettenprüfung ist insbesondere bei Paletten mit Nietverbindungen wie beispielsweise bei Paletten vom Typ der Düsseldorfer Palette von Vorteil, da es gerade bei derartigen Paletten häufig vorkommt, dass sich die Nietverbindungen lockern oder dass Niete ganz verloren gehen. Darüber hinaus kann eine starke Verformung der Winkel, die die Distanzelemente zwischen den Bodenbrettern und den Deckbrettern bilden, z.B. durch das Anfahren des Gabelstaplers an den Winkel zur Lockerung der Verbindung zwischen Winkel und Brett führen. Gelockerte Nietverbindungen oder gar gänzlich fehlende Nieten führen regelmäßig zu einer erheblichen Beweglichkeit der Bodenbretter in horizontaler Richtung, wobei diese Beweglichkeit in einzelnen Fällen auch noch durch eine mögliche Drehung um einen ebenfalls mit einer Niete verbundenen Mittelklotz noch verstärkt wird. Diese horizontale Beweglichkeit ist ein hervorragendes Maß für die horizontale und vertikalen Stabilität der Palette und gleichzeitig die Qualität der Verbindung der Einzelelemente.

Die seitlich gegen die Palette aufgebrachte Prüfkraft kann hierbei grundsätzlich variierende Richtungen einnehmen. Beispielsweise kann sie auch eine vertikale Komponente enthalten, solange die Prüfkraft mit einer ausreichend großen horizontalen Komponente, d.h. parallel zur Ebene der Deckbretter gegen eine Längs- bzw. Schmalseite der Palette wirkt. In Weiterbildung der Erfindung wirkt die Prüfkraft jedoch im Wesentlichen parallel zur Ebene der Deckbretter der Palette, um keine die Verbindungen zwischen den Palettenelementen stabilisierenden Zugkräfte auf die Nietverbindungen oder umgekehrt Druckkräfte, die über damit einhergehende Reibung zur Stabilisierung führen, zu erzeugen.

Die Prüf- und/oder Gegenkräfte können hierbei grundsätzlich sowohl parallel als auch quer zur Längserstreckung der Bodenbretter auf die Palette gegeben werden. Da für die Stabilität der Palette jedoch besonders Bewegungen quer zur Längsrichtung der Bodenbretter von Interesse sind, wird in vorteilhafter Weiterbildung der Erfindung die Prüfkraft im Wesentlichen quer zur Längsrichtung der Bodenbretter auf die Palette gegeben.

Die Prüfkraft kann hierbei grundsätzlich an verschiedenen Stellen der Palette angreifen, wobei jedoch vorteilhafterweise zumindest eine Kraft von Prüfkraft und dieser entgegenwirkenden Widerstandskraft auf den Palettenunterteil gegeben wird, um ein Wackeln des Palettenunterteils gegenüber dem Palettenoberteil zu erzeugen. Der Palettenunterteil meint hierbei die Bodenbretter und die Distanzstücke, mittels derer die Bodenbretter an den Palettenoberteil, d.h. die Deckbretter und die diese zusammenhaltenden Querbretter anbindet. Vorteilhafterweise wird die Prüfkraft oder deren Widerstandskraft auf den Palettenunterteil in der Nähe der Bodenbretter, insbesondere auf die Bodenbretter selbst gegeben, um eine maximale Hebelwirkung gegenüber den Deckbrettern zu erzielen.

Beispielsweise kann hierbei der verfahrbare Prüfkopf, mittels dessen die Prüfkraft erzeugt wird, gegen die Deckbretter fahren, während ein Widerlager die Widerstandskraft gegen ein Bodenbrett gibt. In vorrichtungstechnischer Hinsicht einfacher ist es jedoch, den zumindest einen Prüfkopf gegen das Palettenunterteil, insbesondere ein Bodenbrett zu fahren. Dies erlaubt eine einfachere Erfassung der sich infolge der Prüfkraft einstellenden Verformung.

Die der Prüfkraft entgegenwirkende Widerstandskraft kann beispielsweise mittels eines Anschlags erzeugt werden, gegen den die Palette mit einem Element gedrückt wird, das von dem von der Prüfkraft beaufschlagten Teil beabstandet ist. Beispielsweise kann der Palettenoberteil mit den Deckbrettern bzw. einem Querbrett gegen den Anschlag gefahren werden. Alternativ oder zusätzlich kann die Gegenkraft auch dadurch aufgebracht werden, daß ein Palettenteil, gegenüber dem die seitliche Nachgiebigkeit eines Palettenunterteils geprüft werden soll, geklemmt wird, beispielsweise durch senkrecht zur Ebene der Deckbretter zusammenfahrende Klemmbacken, so daß in diesem Fall die Gegenkraft sich als Reibkraft bzw. als Resultierende der beiden durch die Klemmung entstehenden Reibkräften ergibt. Alternativ oder zusätzlich kann die Gegenkraft auch durch eine Klemmung parallel zur Ebene der Deckbretter erzeugt werden, beispielsweise dadurch, daß ein Bodenbrett oder ein Palettenunterteil senkrecht zur Richtung der Prüfkraft geklemmt wird, wobei auch hier die Gegenkraft sich als Resultierende der an den Klemmbacken entstehenden Reibkräfte ergibt. Ein solches indirektes Aufbringen der Gegenkraft ist auch für die Prüfkraft möglich, beispielsweise dadurch, daß der Prüfkopf entsprechende Klemmbacken aufweist, über die Reibungskräfte erzeugt werden, deren Resultierende die Prüfkraft ist.

Das vorgenannte Festhalten des Palettenoberteils durch beispielsweise einen gegen ein Deckbrett fahrenden Anschlag oder ein Festklemmen eines Deckbretts erlaubt es, mehrere, insbesondere alle Bodenbretter bzw. Palettenunterteile gleichzeitig und/oder in einer Prüfaufspannung zu prüfen bzw. mit Prüfkräften zu beaufschlagen.

Alternativ kann die Palette auch mit einem Bodenbrett bzw. Palettenunterteil gegen den Anschlag gefahren oder in der vorgenannten Weise festgeklemmt bzw. festgehalten werden, wobei vorteilhafterweise die Prüfkraft gegen ein anderes Bodenbrett bzw. Palettenunterteil gegeben wird, so dass sozusagen zwei Bodenbretter bzw. Palettenunterteile gegeneinander gedrückt werden, wobei diese natürlich auch in kinematischer Umkehrung auseinander gezogen werden können. Hierdurch kann bei geringen Prüfkräften eine besonders große und damit einfach erfassbare Verformung erzielt werden, da sich das Spiel zweier Bodenbretter und damit verbundener Winkelstücke summiert. Als "Anschlag" kann hierbei ein tatsächlich fester Anschlag oder, in Weiterbildung der Erfindung, ein zweiter Prüfkopf Verwendung finden, so dass zwei Prüfköpfe in gegenläufiger Richtung gegen zwei voneinander beabstandete Bodenbretter gefahren werden, wobei ein oder aller Prüfköpfe nach Art eines Anschlags gegen den jeweiligen Palettenunterteil gefahren werden können oder die entsprechenden Prüfkräfte auch durch Klemmen bzw. Greifen des jeweiligen Palettenunterteils in diesen einleiten können.

Zur Bestimmung des Qualitätszustandes einer Palette kann hierbei grundsätzlich verschieden vorgegangen werden. Nach einer vorteilhaften Weiterbildung der Erfindung kann an zumindest einer Stelle der Palette eine Prüfkraft vorbestimmter Größe auf die Palette gegeben werden und die sich am Palettenunterteil, insbesondere am Bodenbrett einstellende Verformung erfasst werden. Übersteigt die sich einstellende Auslenkung des Palettenunterteils einen vorbestimmten Grenzwert, wird die Palette als schlecht befunden. Alternativ oder zusätzlich zu einem solchen Grenzwertvergleich kann die sich einstellende seitliche Auslenkung gemessen und der konkret gemessene Wert der Auslenkung mit einer bestimmten Qualität der Stabilität der Paletten korreliert werden, d.h. es können auch Zwischenaussagen wie beispielsweise "noch einigermaßen gut", "bereits Anzeichen einer Instabilität, aber noch tolerabel" etc. getroffen werden.

Alternativ oder zusätzlich kann die Prüfkraft von einem Anfangswert ausgehend gesteigert werden, vorzugsweise kontinuierlich gesteigert werden, wobei die hierbei überwachte seitliche Auslenkung mit einem vorgegebenen Referenzwert verglichen wird. Erreicht die seitliche Auslenkung einen jeweiligen Referenzwert, wird die hierfür erforderliche Prüfkraft als Maß für die Qualität der Palettenstabilität genommen. Hierbei kann die Prüfkraft, bei der sich eine vorgegebene seitliche Auslenkung einstellt, mit einem Grenzwert für die Prüfkraft verglichen werden, um bei Überschreiten die Palette auszusortieren. Alternativ oder zusätzlich können die konkret gemessenen Prüfkraftwerte mit entsprechenden Zwischenstufen für die Palettenstabilität korreliert werden.

Die seitliche Auslenkung der Bodenbretter bzw. der Palettenunterteile kann hierbei grundsätzlich in verschiedener Art und Weise erfasst werden bzw. können verschiedene Bewegungskomponenten als Maß für die seitliche Auslenkung herangezogen werden. In Weiterbildung der Erfindung wird der sich einstellende Verschiebeweg des Bodenbretts bzw. der Bodenbretter in Richtung parallel zur Ebene der Deckbretter gemessen, insbesondere der sich einstellende Verschiebeweg in Richtung der Prüfkraft. Alternativ oder zusätzlich kann auch ein Schrägstellungswinkel gemessen werden, unter dem sich ein Verbindungsstück zwischen Bodenbrett und Deckbrettern verkippt, wenn die Prüfkraft gegen die Palette gegeben wird. Geht man davon aus, dass bei einer Palette im optimalen Referenzzustand die Winkelstücke bzw. die Klötze, die als Distanzelemente fungieren, rechtwinklig zur Ebene der Deckbretter stehen, ist die sich unter seitlicher Belastung einstellende Schrägstellung ein Maß für die Lockerheit der Verbindungen und damit der Stabilität der Palette. Mit dem genannten Schrägstellungswinkel wird also ein Verkippen des Palettenunterteils um eine Kippachse parallel zur Ebene der Deckbretter, insbesondere parallel zur Längsrichtung der Bodenbretter erfasst.

Weiterhin alternativ oder zusätzlich kann auch ein Verdrehwinkel der Bodenbretter erfasst werden, um den sich diese um eine Drehachse senkrecht zur Ebene der Deckbretter verdrehen, wenn sie mit einer seitlichen Prüfkraft beaufschlagt werden. Löst sich nämlich eine Nietverbindung oder haben die Nietverbindungen bereits großes Spiel, wird eine seitlich gegen die Bodenbretter gegebene Prüfkraft eine Verdrehung um eine Achse senkrecht zur Ebene der Deckbretter bewirken, so dass auch der sich einstellende Verdrehwinkel ein Maß für die Palettenstabilität ist. Vorteilhafterweise kann die Prüfkraft hierzu außermittig gegen ein jeweiliges Bodenbrett gegeben werden, um Verdrehungen um den Mittelklotz herum zu erzeugen. Um jedoch auch Verdrehungen um eines der äußeren Verbindungsstücke zu erzwingen, kann auch eine mittige Beaufschlagung erfolgen.

In Weiterbildung der Erfindung kann ein Palettenunterteil in mehreren Abschnitten gleichzeitig, vorzugsweise symmetrisch über eine Längserstreckung des Palettenunterteils verteilt mit Prüfkräften beaufschlagt werden. Insbesondere kann in Weiterbildung der Erfindung ein Bodenbrett über seine gesamte Länge mit der Prüfkraft beaufschlagt werden, um ein Wegkippen des Palettenunterteils um eine Achse parallel zur Längsachse des Bodenbretts zu erzeugen.

Alternativ oder zusätzlich in einem ggf. zusätzlichen Verfahrensschritt kann ein Palettenunterteil auch nur in einem Abschnitt, vorzugsweise punktuell mit der Prüfkraft beaufschlagt werden, um ein Verdrehen um eine Achse senkrecht zur Ebene der Deckbretter zu erzielen.

Die Prüfung der Bodenbretter kann hierbei auch abschnittsweise erfolgen.

In Weiterbildung der Erfindung kann die Prüfkraft nacheinander an verschiedenen Abschnitten der Palette auf diese gegeben werden. Beispielsweise kann die Prüfkraft der Reihe nach auf die verschiedenen Bodenbretter gegeben werden, um die seitlichen Auslenkungen eines jeden Bodenbretts bzw. Palettenunterteils zu bestimmen, so dass gezielt erfasst werden kann, welches der Bodenbretter bzw. welche der damit verbundenen Winkelstücke nicht mehr fest angelenkt sind. Dies erlaubt eine gezielte Fehlerortung, wobei vorteilhafterweise ein einfacher Prüfaufbau mit ggf. nur einem Prüfkopf ausreichend ist, der nacheinander gegen die verschiedenen Abschnitte gefahren wird.

In alternativer Weiterbildung der Erfindung können mehrere, insbesondere auch alle relevanten Abschnitte der Palette gleichzeitig geprüft werden. Hierzu kann die Vorrichtung eine entsprechende Anzahl von Prüfköpfen aufweisen, die jeweils Prüfkräfte an den gewünschten Stellen gegen die Palette aufbringen.

Nach einer vorteilhaften Ausführung der Erfindung kann die Prüfung im Stillstand erfolgen, d.h. die Palette wird ortsfest in der Prüfstation gehalten, wobei zur Erzielung einer hohen Effizienz vorteilhafterweise für jeden Prüfabschnitt ein Prüfkopf vorgesehen sein kann.

Alternativ kann die Prüfung auch getaktet erfolgen, wobei die Palette und/oder ein jeweiliger Prüfkopf nach Prüfung eines Abschnitts weitergefahren wird, um den nächsten Abschnitt mit der Prüfkraft zu beaufschlagen.

Weiterhin alternativ kann die Prüfung auch im Durchlauf erfolgen. Die Palette wird durch die Prüfstation hindurch bewegt, wobei sich die Palette an den stationären Prüfköpfen vorbei bewegt und damit die seitliche Ausweichung der Bodenbretter über ihre gesamte Länge erfasst wird.

Die Erfindung wird nachfolgend anhand vorteilhafter Ausführungsformen und zugehöriger Zeichnungen näher erläutert. In den Zeichnungen zeigen:
- Fig. 1:: eine schematische Seitenansicht der Prüfvorrichtung nach einer vorteilhaften Ausführung der Erfindung mit einer zu prüfenden Palette, die in Seitenansicht dargestellt ist, wobei die Prüfköpfe im Bereich der Bodenbretter der Palette gezeigt sind,
- Fig. 2:: eine Draufsicht auf die Palette aus Fig. 1 mit den an den endseitig vorgesehenen Bodenbrettern angeordneten Prüfköpfen,
- Fig. 3:: eine stirnseitige Ansicht der Palette aus den Figuren 1 und 2,
- Fig. 4:: eine schematische Seitenansicht des Prüfaufbaus ähnlich Fig. 1, wobei die seitlichen Auslenkungen der Palettenunterteile bzw. Bodenbretter unter Einfluss der Prüfkräfte gezeigt sind,
- Fig. 5:: eine schematische Draufsicht auf die Unterseite eines Bodenbretts, das infolge der Prüfkräfte eine seitliche Bewegung und ggf. eine zusätzliche Drehung erfährt, wie die Figuren 5 (a) und (b) zeigen, und

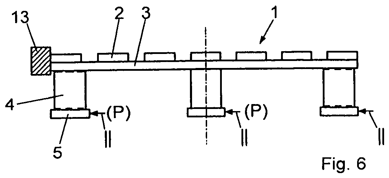

- Fig. 6:: eine schematische Seitenansicht der Palette und des Prüfaufbaus ähnlich den Figuren 1 und 4, wobei mehrere Bodenbretter gleichsinnig mit jeweils einer Prüfkraft beaufschlagt werden und eine gegenläufige Widerstandskraft mittels eines Anschlags auf die Deckbretter gegeben wird.

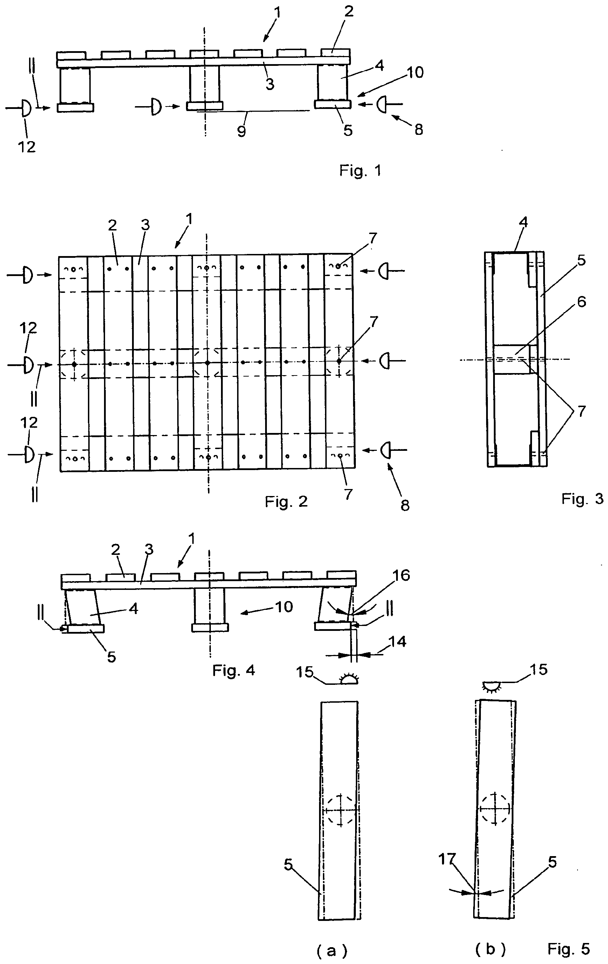

Die in den Figuren 1-3 gezeigte Palette 1 ist eine sog. Düsseldorfer Palette mit Nietverbindungen zwischen den Palettenelementen. Sie umfasst in an sich bekannter Weise eine Vielzahl von Deckbrettern 2, die auf Querbrettern 3 sitzen und mit diesen zusammen den Palettenoberteil bilden.

Mit den genannten Querbrettern 3 sitzen die Deckbretter 2 auf einer Mehrzahl von Distanzelementen in Form von Winkelstücken 4, die den genannten Palettenoberteil auf Bodenbrettern 5 bzw. Laufbrettern halten, die sich parallel zu den Deckbrettern 2 erstrecken. Dabei sind insgesamt drei Bodenbretter 5 vorgesehen, die in Endabschnitten durch jeweils ein Winkelstück 4 gehalten werden und in der Mitte durch einen Klotz zusätzlich abgestützt sind, vgl. Figuren 2 und 3.

Die Winkelstücke 4 sind dabei jeweils durch Nietverbindungen 7 an den Deckbrettern 2 bzw. den damit verbundenen Querbrettern 3 sowie andererseits den Bodenbrettern 5 befestigt.

Die Winkelstücke 4 zusammen mit den Bodenbrettern 5 sowie die mittig vorgesehenen Klötze 6 bilden den "Palettenunterteil" im Sinne der vorliegenden Anmeldung.

Wie die Figuren 1 und 2 zeigen, wird die Palette 1 in der Prüfvorrichtung 8 auf einer Aufstandsfläche 9, die ein Prüftisch oder auch ein Teil einer durch die Prüfvorrichtung führenden Förderbahn sein kann, positioniert, so dass der Palettenunterteil 10 seitlich, d.h. von einer Stirn- bzw. Schmalseite bzw. einer Längsseite der Palette 1 her mit einer Prüfkraft 11 beaufschlagt werden kann.

Die Prüfvorrichtung 8 besitzt hierzu in der gezeichneten Ausführungsform mehrere Prüfköpfe 12, die parallel zur Aufstandsfläche 9 und/oder parallel zu der Ebene der Deckbretter 2 verfahrbar sind und Prüfkräfte 11 im Wesentlichen parallel zu der genannten Ebene der Deckbretter 2 aufbringen können. Die Prüfköpfe 12 sind hierbei vorteilhafterweise derart positioniert und ausgebildet, dass die Prüfkräfte 11 auf die Bodenbretter 5 oder in der Nähe der Bodenbretter 5 auf den Palettenunterteil 10 gegeben werden können.

Vorteilhafterweise werden die Prüfkräfte 11 im Wesentlichen senkrecht zur Längserstreckung der Bodenbretter 5 auf diese gegeben.

In der gezeichneten Ausführung nach den Figuren 1-3, können für jedes Bodenbrett 5 mehrere Prüfköpfe 12 vorgesehen sein, die über die Länge eines jeweiligen Bodenbretts 5 verteilt an verschiedenen Abschnitten desselben Prüfkräfte auf das Bodenbrett 5 geben können. Vorteilhafterweise können die Prüfköpfe 12 wahlweise synchron miteinander verfahren werden, um ein Bodenbrett 5 über seine gesamte Länge gleichmäßig zu beaufschlagen, oder individuell, d.h. unabhängig voneinander gegen das Bodenbrett 5 gefahren werden, um punktuell an einzelnen Stellen auf das Bodenbrett 5 eine Prüfkraft aufzubringen. In der gezeichneten Ausführung sind dabei für jedes Bodenbrett 5 drei Prüfköpfe 12 vorgesehen. Es versteht sich jedoch, dass auch andere Anordnungen mit einer unterschiedlichen Anzahl von Prüfköpfen, ggf. auch unterschiedlich vielen Prüfköpfen an den verschiedenen Bodenbrettern vorgesehen sein können.

In der gezeichneten Ausführungsform ist dabei vorgesehen, dass allen Bodenbrettern 5 Prüfköpfe 12 zugeordnet sind, wobei vorteilhafterweise zumindest zwei Bodenbrettern 5 Prüfköpfe 12 zugeordnet sind, die gegenläufig verfahrbar sind bzw. gegenläufige Prüfkräfte 11 auf die entsprechenden Bodenbretter 5 aufbringen können. Hierdurch können zwei Bodenbretter 5 gegenläufig zueinander verspannt werden, wie dies Fig. 4 zeigt.

Alternativ können den Bodenbrettern 5 auch Prüfköpfe 12 zugeordnet sein, die die Bodenbretter 5 in gleicher Richtung mit Prüfkräften 11 beaufschlagen. In diesem Fall wird die Palette 1 mit den Deckbrettern 2 bzw. den Querbretter 3 gegen einen Anschlag 13 gefahren, um eine den Prüfkräften 11 entgegenwirkenden Gegenkraft bzw. Widerstandskraft entgegenzusetzen.

Wie Fig. 4 zeigt, ergibt sich durch die seitliche Beaufschlagung der Bodenbretter 5 eine seitliche Auslenkung der Bodenbretter 5 sowie der Winkelstücke 4 bzw. der Klötze 6 mit einer Bewegungskomponente parallel zu der Ebene der Deckbretter 2. Dieser Verschiebeweg 14 - vgl. Fig. 4 - wird durch einen geeigneten Messkopf 15 erfasst und mit der von dem jeweiligen Prüfkopf 12 aufgebrachten Prüfkraft 11 korreliert, d.h. es wird erfasst, bei welcher Größe der Prüfkraft sich welche Größe des Verschiebewegs einstellt. Der genannte Messkopf 15 kann hierbei ggf. in den Prüfkopf 12 integriert sein, so dass der Verfahrweg des Prüfkopfes 12 als Maß für die Auslenkung des Bodenbretts 5 genommen wird.

Vorteilhafterweise wird hierbei nicht nur der Verschiebeweg parallel zur Ebene der Deckbretter 2 als seitliche Auslenkung erfasst. Wie Fig. 4 zeigt, stellt sich als Folge der Beaufschlagung durch die Prüfkräfte 11 auch ein Verkippen des jeweiligen Palettenunterteils 10 um eine Kippachse parallel zu der Längsachse der Bodenbretter 5 ein. Der Verkippwinkel 16 kann durch einen geeigneten Messkopf 15 erfasst und ebenfalls als Maß für die Palettenstabilität verwendet werden.

Weiterhin kann vorteilhafterweise auch ein Verdrehen der Bodenbretter 5 um eine Verdrehachse senkrecht zur Ebene der Deckbretter 2 durch einen geeigneten Messkopf 15 erfasst werden. Wie die Figuren 5 (a) und 5 (b) zeigen, führt die Beaufschlagung eines Bodenbretts 5 durch eine Prüfkraft 11 bei entsprechender Schädigung oder Lockerung der Nietverbindungen 7 auch zu einer Verdrehung des Bodenbretts 5 um eine Drehachse senkrecht zur Ebene der Deckbretter 2. Lösen sich beispielsweise die seitlichen Winkelstücke 4 gänzlich oder teilweise, kann sich ein Bodenbrett 5 um die von dem mittleren Klotz 6 definierte Achse verdrehen, wie dies Fig. 5 (b) zeigt.

Durch das erfindungsgemäße Prüfverfahren lassen sich schadhafte Paletten mit geringen Prüfkräften, die seitlich gegen das Palettenunterteil gegeben werden, ermitteln. Vorteilhafterweise wirken dabei die Prüf- und Gegenkräfte - oder deren Resultiernden, wenn die Kräfte an mehreren Punkten eingeleitet werden - in einer gemeinsamen Ebene senkrecht zur Ebene der Deckbretter gegenläufig zueinander, so daß ein seitliches Wackeln bzw. Nachgeben der Palettenunterteile leicht erfaßt werden kann, ohne daß eine Verwindung des Palettenoberteils die Meßwerte überlagern und verfälschen würde, wie es der Fall wäre, wenn die Palette auf Diagonalverwindung des Palettenoberteils beansprucht werden würde.

## Patentansprüche

1. Verfahren zum Prüfen von Paletten (1), bei dem mittels zumindest eines Prüfkopfs (12) eine Prüfkraft (11) und/oder eine der Prüfkraft (11) entgegenwirkende Gegenkraft auf die Palette (1) gegeben und die sich einstellende Verformung der Palette (1) überwacht wird, **dadurch gekennzeichnet, daß** die Prüfkraft (11) und/oder die dieser entgegenwirkende Gegenkraft zumindest mit einer Komponente parallel zur Ebene der Deckbretter der Palette wirkend seitlich gegen ein Palettenunterteil (10) gegeben und eine seitliche Auslenkung (14, 16, 17) des Palettenunterteils (10) gegenüber dem Palettenoberteil erfasst wird, anhand derer der Palettenzustand bestimmt wird.

2. Verfahren nach dem vorhergehenden Anspruch, wobei die Prüfkraft (11) und/oder die Gegenkraft im Wesentlichen parallel zur Ebene der Deckbretter (2) quer zu den Bodenbrettern (5) auf das Palettenunterteil (10), vorzugsweise auf zumindest ein Bodenbrett (5) gegeben wird.

3. Verfahren nach einem der vorhergehenden Ansprüche, wobei die Prüfkraft (11) senkrecht zur Längserstreckung eines Bodenbretts (5) auf das Bodenbrett (5) gegeben wird.

4. Verfahren nach einem der vorhergehenden Ansprüche, wobei als seitliche Auslenkung des Palettenunterteils (10) ein Verschiebeweg (14) zumindest eines Bodenbretts (5) in Richtung parallel zur Ebene der Deckbretter (2), ein Kippwinkel (16) eines Verbindungsstücks (4, 6) zwischen Boden- und Deckbrettern und/oder ein Verdrehwinkel (17) eines Bodenbretts (5) um eine Drehachse senkrecht zur Ebene der Deckbretter (2) erfasst wird.

5. Verfahren nach einem der vorhergehenden Ansprüche, wobei zwei voneinander beabstandete Palettenunterteilabschnitte, insbesondere Bodenbretter (5), gegenläufig mit jeweils einer Prüfkraft (11) beaufschlagt werden.

6. Verfahren nach einem der vorhergehenden Ansprüche, wobei zwei voneinander beabstandete Palettenunterteilabschnitte, insbesondere Bodenbretter (5), gleichsinnig mit jeweils einer Prüfkraft (11) beaufschlagt werden und eine zu den Prüfkräften (11) gegensinnige Gegenkraft auf ein Palettenoberteil, insbesondere die Deckbretter (2) und/oder damit verbundene Querbretter (3), gegeben wird.

7. Verfahren nach einem der vorhergehenden Ansprüche, wobei die erfasste seitliche Auslenkung (14, 16, 17) mit einem Grenzwert verglichen wird, wobei bei Überschreiten des Grenzwerts ein Qualitätsmangel festgestellt wird.

8. Verfahren nach einem der vorhergehenden Ansprüche, wobei die Prüfkraft (11) gesteigert, vorzugsweise kontinuierlich erhöht wird, bis die seitliche Auslenkung (14, 16, 17) ein vorbestimmtes Maß erreicht, und die Prüfkraft (11), bei der die seitliche Auslenkung das genannte vorbestimmte Maß erreicht, mit einem Grenzwert verglichen wird.

9. Verfahren nach einem der vorhergehenden Ansprüche, wobei ein Palettenunterteil (10), insbesondere ein Bodenbrett (5), in mehreren Abschnitten gleichzeitig, vorzugsweise symmetrisch über eine Längserstreckung des Palettenunterteils verteilt, insbesondere über die gesamte Palettenlänge, mit der Prüfkraft (11) beaufschlagt wird.

10. Verfahren nach einem der vorhergehenden Ansprüche, wobei ein Palettenunterteil (10), insbesondere ein Bodenbrett (5), nur abschnittsweise, vorzugsweise punktuell, insbesondere zu einem Ende hin versetzt, mit einer Prüfkraft (11) beaufschlagt wird.

11. Verfahren nach einem der vorhergehenden Ansprüche, wobei die Prüfung im Stillstand vorgenommen wird und mehrere Prüfabschnitte gleichzeitig mittels mehrerer Prüfköpfe (12) geprüft werden.

12. Verfahren nach einem der vorhergehenden Ansprüche, wobei die Prüfung getaktet durchgeführt wird, wobei mittels eines Prüfkopfes (12) mehrere Prüfabschnitte nacheinander mit einer Prüfkraft (11) beaufschlagt werden.

13. Verfahren nach einem der vorhergehenden Ansprüche, wobei die Prüfung kontinuierlich im Durchlauf durchgeführt wird.

14. Vorrichtung zum Prüfen von Paletten (1), nach dem Verfahren gemäß einem der Ansprüche 1 bis 13, mit zumindest einem Prüfkopfs (12) zur Beaufschlagung der Palette (1) mit einer Prüfkraft (12) sowie eine Erfassungsvorrichtung zur Erfassung der sich einstellende Verformung der Palette (1), **dadurch gekennzeichnet, dass** der Prüfkopf (12) derart angeordnet und ausgebildet ist, dass die Prüfkraft (11) und/oder eine der Prüfkraft (11) entgegenwirkende Gegenkraft zumindest mit einer Komponente parallel zur Ebene der Deckbretter der Palette wirkend seitlich von einer Längs- oder Schmalseite der Palette (1) her gegen ein Palettenunterteil (10) gegeben wird, und die Erfassungsvorrichtung zumindest einen Meßkopf aufweist, der dazu ausgebildet ist, eine seitliche Auslenkung (14, 16, 17) des Palettenunterteils (10) gegenüber dem Palettenoberteil zu messen, wobei eine Auswerteeinrichtung zur Bestimmung des Palettenzustands anhand der seitlichen Auslenkung (14, 16, 17) und der dabei ausgeübten seitlichen Prüfkraft (11) vorgesehen ist.

## Claims

1. Method for testing pallets (1), in which a test force (11) and/or a counterforce counteracting the test force (11) is applied by means of at least one test head (12) to the pallet (1) and the resulting deformation of the pallet (1) is monitored, **characterized in that** the test force (11) and/or the counterforce counteracting said test force is applied with at least one component operating in parallel with the level of the top boards of the pallet laterally against a pallet base (10), and a lateral deflection (14, 16, 17) of the pallet base (10) relative to the pallet top is detected, on the basis of which the pallet condition is determined.

2. Method according to the preceding claim, wherein the test force (11) and/or the counterforce is applied substantially in parallel with the level of the top boards (2) transversely to the bottom boards (5) to the pallet base (10), preferably to at least one bottom board (5).

3. Method according to any one of the preceding claims, wherein the test force (11) is applied in a direction perpendicular to the longitudinal extension of a bottom board (5) to the bottom board (5).

4. Method according to any one of the preceding claims, wherein as a lateral deflection of the pallet base (10) a displacement path (14) of at least one bottom board (5) in a direction parallel to the level of the top boards (2), a tilt angle (16) of a connection piece (4, 6) between bottom and top boards and/or a twist angle (17) of a bottom board (5) about a rotational axis in a direction perpendicular to the level of the top boards (2) is detected.

5. Method according to any one of the preceding claims, wherein two spaced-apart pallet base sections, particularly bottom boards (5), are oppositely subjected to a respective test force (11).

6. Method according to any one of the preceding claims, wherein two spaced-apart pallet base sections, in particular bottom boards (5), are subjected in the same direction to a respective test force (11) and a counterforce opposite to the test forces (11) is applied to a pallet top, particularly the top boards (2) and/or cross boards (3) connected thereto.

7. Method according to any one of the preceding claims, wherein the detected lateral deflection (14, 16, 17) is compared with a limit value, wherein when the limit value is exceeded, a quality defect is detected.

8. Method according to any one of the preceding claims, wherein the test force (11) is raised, preferably continuously increased, until the lateral deflection (14, 15, 17) reaches a predetermined degree, and the test force (11) at which the lateral deflection reaches said predetermined degree is compared with a limit value.

9. Method according to any one of the preceding claims, wherein a pallet base (10), in particular a bottom board (5), is subjected to the test force (11) in plural sections at the same time, preferably distributed in symmetry over a longitudinal extension of the pallet base, particularly over the whole pallet length.

10. Method according to any one of the preceding claims, wherein a pallet base (10), particularly a bottom board (5), is subjected to a test force (11) only in sections, preferably selectively, especially offset towards an end.

11. Method according to any one of the preceding claims, wherein testing is performed at a standstill and plural test sections are simultaneously tested by means of plural test heads (12).

12. Method according to any one of the preceding claims, wherein testing is performed in clocked fashion, wherein by means of a test head (12) plural test sections are subjected one after the other to a test force (11).

13. Method according to any one of the preceding claims, wherein testing is performed continuously in an ongoing manner.

14. Device for testing pallets (1) according to the method according to one of claims 1 to 13, comprising at least one test head (12) for subjecting the pallet (1) to a test force (12) and a detecting device for detecting the evolving deformation of the pallet (1), **characterized in that** the test head (12) is arranged and configured such that the test force (11) and/or a counterforce counteracting the test force (11) is applied at least with one component operating parallel to the level of the top boards of the pallet laterally from a longitudinal or narrow side of the pallet (1) against a pallet base (10), and the detection device comprises at least one measuring head which is configured to measure a lateral deflection (14, 16, 17) of the pallet base (10) in relation to the pallet top, wherein an evaluation means is provided for determining the pallet condition on the basis of the lateral deflection (14,1 6, 17) and the lateral test force (11) exerted thereby.

## Revendications

1. Procédé d'essai pour tester des palettes (1), d'après lequel au moyen d'au moins une tête de test (12), une force de test (11) et/ou une force antagoniste agissant à l'encontre de la force de test (11) est appliquée sur la palette (1), et l'on surveille la déformation de la palette (1), qui s'établit, **caractérisé en ce que** la force de test (11) et/ou la force antagoniste agissant à l'encontre de celle-ci est appliquée latéralement contre une partie inférieure de palette (10) avec au moins une composante agissant parallèlement au plan des planches de recouvrement de la palette, et l'on relève une déviation latérale (14, 16, 17) de la partie inférieure de palette (10) par rapport à la partie supérieure de palette, moyennant laquelle on détermine l'état de la palette.

2. Procédé selon la revendication précédente, d'après lequel la force de test (11) et/ou la force antagoniste est appliquée, sensiblement de manière parallèle au plan des planches de recouvrement (2), transversalement aux planches de sol (5), sur la partie inférieure de palette (10), de préférence sur au moins une planche de sol (5).

3. Procédé selon l'une des revendications précédentes, d'après lequel la force de test (11) est appliquée sur une planche de sol (5), perpendiculairement à l'étendue longitudinale de la planche de sol (5).

4. Procédé selon l'une des revendications précédentes, d'après lequel on relève en guise de déviation latérale de la partie inférieure de palette (10), une translation (14) d'au moins une planche de sol (5) dans la direction parallèle au plan des planches de recouvrement (2), un angle de basculement (16) d'une pièce de liaison (4, 6) entre planches de recouvrement et planches de sol, et/ou un angle de rotation relative (17) d'une planche de sol (5) autour d'un axe de rotation perpendiculaire au plan des planches de recouvrement (2).

5. Procédé selon l'une des revendications précédentes, d'après lequel deux tronçons de partie inférieure de palette mutuellement espacés l'un de l'autre, notamment des planches de sol (5), sont sollicités de manière opposée, chacun respectivement avec une force de test (11).

6. Procédé selon l'une des revendications précédentes, d'après lequel deux tronçons de partie inférieure de palette mutuellement espacés l'un de l'autre, notamment des planches de sol (5), sont sollicités dans le même sens, chacun respectivement avec une force de test (11), et une force antagoniste de sens opposé à celui des forces de test (11) est appliquée sur une partie supérieure de palette, notamment les planches de recouvrement (2) et/ou des planches transversales (3) qui y sont liées.

7. Procédé selon l'une des revendications précédentes, d'après lequel la déviation latérale (14, 16, 17) relevée est comparée à une valeur limite, et dans le cas d'un dépassement de cette valeur limite, il est établi un défaut de qualité.

8. Procédé selon l'une des revendications précédentes, d'après lequel la force de test est accrue, de préférence augmentée de manière continue, jusqu'à ce que la déviation latérale (14, 16, 17) atteigne une valeur prédéterminée, et l'on compare alors la force de test (11) pour laquelle la déviation latérale atteint ladite valeur prédéterminée, avec une valeur limite.

9. Procédé selon l'une des revendications précédentes, d'après lequel une partie inférieure de palette (10), notamment une planche de sol (5), est sollicitée avec la force de test (11) dans plusieurs tronçons simultanément, de préférence de manière symétriquement répartie sur une étendue longitudinale de la partie inférieure de palette, notamment sur la totalité de la longueur de palette.

10. Procédé selon l'une des revendications précédentes, d'après lequel une partie inférieure de palette (10), notamment une planche de sol (5), n'est sollicitée avec une force de test (11) qu'en certains endroits, de préférence de manière ponctuelle, notamment de manière décalée vers une extrémité.

11. Procédé selon l'une des revendications précédentes, d'après lequel le test est effectué à l'arrêt ou à l'état immobile, et plusieurs tronçons de test sont testés simultanément au moyen de plusieurs têtes de test (12).

12. Procédé selon l'une des revendications précédentes, d'après lequel le test est effectué de manière cyclique, plusieurs tronçons de test étant sollicités successivement avec une force de test (11) au moyen d'une tête de test (12).

13. Procédé selon l'une des revendications précédentes, d'après lequel le test est effectué en passage continu.

14. Dispositif pour tester des palettes (1) conformément au procédé selon l'une des revendications 1 à 13, comprenant au moins une tête de test (12) pour solliciter la palette (1) avec une force de test (11), ainsi qu'un dispositif de relevé de la déformation de la palette (1), qui s'établit, **caractérisé en ce que** la tête de test (12) est agencée et configurée de manière telle, que la force de test (11) et/ou une force antagoniste agissant à l'encontre de la force de test (11) soit appliquée latéralement contre une partie inférieure de palette (10) à partir d'un côté long ou d'un côté court de la palette (1), avec au moins une composante agissant parallèlement au plan des planches de recouvrement de la palette, et **en ce que** le dispositif de relevé comporte au moins une tête de mesure qui est configurée pour mesurer une déviation latérale (14, 16, 17) de la partie inférieure de palette (10) par rapport à la partie supérieure de palette, un dispositif de traitement de données étant prévu pour déterminer l'état de la palette, au regard de la déviation latérale (14, 16, 17) et de la force de test (11) latérale exercée à cette occasion.
